# EUROPÄISCHE PATENTSCHRIFT

(11) **EP 0 501 944 B1**
(45) Veröffentlichungstag und Bekanntmachung des Hinweises auf die Patenterteilung: **13.09.1995**
(21) Anmeldenummer: 92890029.9
(22) Anmeldetag: 07.02.1992
(51) Int. Cl.: F23L 15/00, F23C 11/00, F23C 11/02, F23B 1/22, F23G 7/10, F23C 9/00, F23N 1/02

(54) **Verfahren und Vorrichtung zum Verbrennen von stückigen, biogenen Brennstoffen**
Method and device for combustion of lump biogenic fuels
Procédé et dispositif pour la combustion de combustibles biogènes en morceaux

(30) Priorität: 26.02.1991 AT 393/91
(43) Veröffentlichungstag der Anmeldung: 02.09.1992
(73) Patentinhaber: OBERÖSTERREICHISCHE FERNGAS GESELLSCHAFT m.b.H., 4030 Linz (AT)
(72) Erfinder: Krennbauer, Franz, A-4060 Leonding (AT)
(74) Vertreter: Hübscher, Heiner, Dipl.-Ing.

(56) Entgegenhaltungen:
- DE-A- 3 029 066
- DE-A- 3 612 888
- GB-A- 2 040 420
- US-A- 4 027 602
- SOVIET PATENTS ABSTRACTS Section PQ, Week 8950, 31. Januar 1990 Derwent Publications Ltd., London, GB; Class Q, AN 86-113129 & SU-A-1 483 168 (CKD DUKLA TATRA WKS)

## Beschreibung

Die Erfindung bezieht sich auf ein Verfahren zum Verbrennen von stückigen, biogenen Brennstoffen, die mit Hilfe vorgewärmter Verbrennungsluft zunächst getrocknet und dann verbrannt werden, sowie auf eine Vorrichtung zur Durchführung des Verfahrens.

Biogene Brennstoffe, wie Waldhackgut, Sägeabfälle, Rinden, Stroh und andere Abfälle, beispielsweise aus der Papier- und Zellstoffindustrie, bereiten bei ihrer Verbrennung Schwierigkeiten, weil sie aufgrund ihrer Struktur und Zusammensetzung wirtschaftlich nicht in einem ausreichenden Maß zerkleinert werden können, einen vergleichsweise niedrigen Heizwert aufweisen und aufgrund der Grobkörnigkeit und der Verschwelungsgefahr schwierig zu trocknen sind. Zur Verbrennung solcher biogener Brennstoffe wird üblicherweise eine Rostfeuerung eingesetzt, bei der kalte Verbrennungsluft durch den Rost gedrückt wird, während die Trocknung und Erwärmung des Brennstoffes auf dem Rost mit Hilfe eines Brenners erfolgt, der oberhalb des Rostes angeordnet ist. Nachteilig bei einer solchen Rostfeuerung ist vor allem daß für einen annähernd vollständigen Ausbrand ein hoher Luftüberschuß erforderlich wird, der eine vergleichsweise niedrige adiabatische Verbrennungstemperatur und damit die Gefahr eines erheblichen Ausstoßes an polyzyklischen aromatischen Kohlenwasserstoffen mit sich bringt. Außerdem wird die Wirtschaftlichkeit einer solchen Feuerung durch den notwendigen Einsatz hochwertiger Brennstoffe zum Speisen des Brenners beeinträchtigt, der ja lediglich zur Erhöhung der Flammtemperatur dient.

Mit ähnlichen Nachteilen muß bei einer Verbrennung stückeliger, biogener Brennstoffe in Wirbelschichtöfen gerechnet werden, weil die zur Bildung eines Wirbelbettes erforderliche Komprimierung der Verbrennungsluft wegen der damit verbundenen Wärmebelastung des Verdichters nur geringfügig vorgewärmt werden kann. Aus diesem Grunde wird wiederum der Einsatz eines hochwertigen Stützbrennstoffes unvermeidbar.

Der Erfindung liegt somit die Aufgabe zugrunde, diese Mängel zu vermeiden und ein Verfahren zum Verbrennen von stückigen, biogenen Brennstoffen der eingangs geschilderten Art so zu verbessern, daß eine wirtschaftliche, schadstoffarme Verbrennung mit geringen Abgasverlusten sichergestellt werden kann.

Die Erfindung löst die gestellte Aufgabe dadurch, daß als vorgewärmte Verbrennungsluft den biogenen Brennstoffen sauerstoffhaltige Abgase aus Brennkraftmaschinen, insbesondere Gasturbinen, bzw. aus industriellen Kühlprozessen, z. B. der Zementklinkerkühlung, zugeführt werden.

Der Einsatz heißer, sauerstoffhaltiger Abgase bringt nicht nur eine wirtschaftliche Ausnützung der fühlbaren Abwärme dieser Abgase mit sich, sondern verbessert auch die Feuerungsbedingungen für die biogenen Brennstoffe, weil durch die heißen Abgase als Verbrennungsluft eine gleichmäßige, rasche Trocknung und hohe Verbrennungstemperaturen erreicht werden. Dies führt zu einer spürbaren Verringerung des Ausstoßes an polyzyklischen, aromatischen Kohlenwasserstoffen. Aufgrund des möglichen, geringen Luftüberschusses können außerdem die Abgasverluste gesenkt und damit ein höherer Wirkungsgrad erzielt werden.

Als heiße Abgase kommen insbesondere Abgase aus Gasturbinen in Frage, die zur Kühlung der Turbinenschaufeln einen hohen Luftüberschuß benötigen. Die Abgase anderer Brennkraftmaschinen, beispielsweise von Dieselmotoren, weisen zwar einen geringeren Sauerstoffgehalt auf, doch reicht dieser Sauerstoffgehalt noch durchaus für die Verbrennung von schwierig verfeuerbaren, biogenen Brennstoffen aus. Wird Kühlluft aus industriellen Kühlprozessen auf ein ausreichendes Temperaturniveau erwärmt, wie dies z. B. bei der Kühlung von Zementklinker der Fall ist, so eignen sich auch solche Abgase als Verbrennungsluft für die Verfeuerung biogener Brennstoffe. Wesentlich für ein einfaches Betreiben einer Feuerung zum Verbrennen biogener Brennstoffe ist, daß eine ausreichende Menge an heißen Abgasen mit einem zumindest angenähert gleichbleibenden Sauerstoffgehalt zur Verfügung steht.

Ist mit einem sich ändernden Wärmebedarf und demzufolge mit einer Änderung der zugeführten Brennstoffmenge zu rechnen, so kann bei der Bereitstellung eines konstanten Abgasstromes für die Verbrennung der biogenen Brennstoffe entweder der Stickoxidausstoß vergrößert werden, wenn aufgrund einer größeren Brennstoffmenge die Verbrennungstemperatur ansteigt, oder die Gefahr auftreten, daß sich polyzyklische aromatische Kohlenwasserstoffe bilden, wenn die Verbrennungstemperatur wegen eines geringen Brennstoffeinsatzes unter ein bestimmtes Maß absinkt. Außerdem ergeben sich aufgrund der Schwankungen der Verbrennungstemperatur hohe Anforderungen an die feuerfeste Auskleidung des Feuerungsraumes. Zur Vermeidung dieser Schwierigkeiten können die sauerstoffhaltigen Abgase den biogenen Brennstoffen in einer von der Verbrennungstemperatur abhängigen Menge zugeführt werden, so daß die Verbrennung der biogenen Brennstoffe in einem für eine solche Verbrennung vorteilhaften Temperaturbereich ablaufen kann, und zwar unabhängig von der jeweils eingesetzten Brennstoffmenge.

Reicht das Abgasangebot aufgrund eines besonders hohen Wärmebedarfes nicht aus, um die Verbrennungstemperatur in einem vorgegebenen Bereich zu halten, so kann zusätzlich ein Teil der aus der Verbrennung der biogenen Brennstoffe anfallenden Rauchgase nach einer Kühlung in einer von der Verbrennungstemperatur abhängigen Menge den sauerstoffhaltigen Abgasen zugemischt werden, was zu einem entsprechenden Absinken der Verbrennungstemperatur führt. Allerdings kann es wegen der mit zunehmender Abgasmenge geringeren Verweilzeit der Brennstoffteile im Feuerungsraum notwendig werden, den Sollwert für die Verbrennungstemperatur anzuheben, um die Verbrennung zu beschleunigen.

Eine innige Vermischung des stückeligen, biogenen Brennstoffes mit den heißen Abgasen als Verbrennungsluft unterstützt die Verbrennung, wobei sich besonders günstige Verhältnisse ergeben, wenn der biogene Brennstoff einem kontinuierlichen Abgasstrom als Verbrennungsluft dosiert aufgegeben wird. Die schwereren Brennstoffstücke werden in diesem Abgasstrom langsamer als die leichteren Brennstoffstücke gefördert, so daß sich sowohl für die schwereren als auch für die leichteren Brennstoffstücke ein guter Ausbrand einstellt, zumal durch die gute Umspülung des stückeligen Brennstoffes durch den Abgasstrom nicht nur eine gleichmäßige Brennstofftrocknung gewährleistet, sondern auch wegen des gleichmäßigen Sauerstoffangebotes und der hohen Verbrennungstemperaturen eine schadstoffarme Verbrennung mit einem geringen Sauerstoffüberschuß ermöglicht wird.

Fallen Brennstoffe mit einer stark unterschiedlichen Stückelung an, so kann der biogene Brennstoff in Abhängigkeit von seiner Korngröße dem Abgasstrom in Strömungsrichtung hintereinander aufgegeben werden, um den grobkörnigeren Brennstoffanteil bei einem höheren Temperaturniveau zu verbrennen, das durch das Verbrennen des vorher aufgegebenen, feinkörnigeren Brennstoffanteiles erhalten wird.

Eine andere Möglichkeit, die fühlbare Abwärme heißer, sauerstoffhaltiger Abgase für die Verfeuerung biogener Brennstoffe vorteilhaft auszunützen, besteht darin, daß der Abgasstrom dem biogenen Brennstoff oberhalb bzw. im Bereich eines Wirbelbettes zugeführt wird und daß der vom Abgasstrom mitgerissene Brennstoff in einer an das Wirbelbett anschließenden Verbrennungsstrecke in dem Abgasstrom verbrannt wird. Wegen der Wärmebelastung des Verdichters ist es nur bedingt möglich, die zur Erzeugung des Wirbelbettes benötigte Druckluft vorzuwärmen. Aus diesem Grunde kann dieser Druckluft höchstens ein Anteil des heißen Abgases zugemischt werden. Die gleichmäßige Trocknung und Verbrennung des Brennstoffes muß daher durch einen gesondert zugeführten Abgasstrom sichergestellt werden, der den im Wirbelbett vorgetrockneten Brennstoff mitreißt, so daß nach einer Trocknung der Brennstoff bei hohen Temperaturen in der an das Wirbelbett anschließenden Verbrennungsstrecke im Abgasstrom verbrennt.

Schließlich kann auch eine herkömmliche Rostfeuerung durch den Einsatz heißer, sauerstoffhaltiger Abgase erheblich verbessert werden, um den Einsatz von hochwertigem Stützbrennstoff zu vermeiden bzw. erheblich zu verringern. Zu diesem Zweck kann dem einem Förderrost aufgegebenen, biogenen Brennstoff der Abgasstrom im Aufgabebereich des Brennstoffes zugeführt werden, der somit wiederum durch den Abgasstrom getrocknet und erwärmt wird. Die zur Kühlung des Förderrostes durch den Rost geblasene Verbrennungsluft kann daher auf das für die Kühlung erforderliche Maß reduziert werden. Um die Wirkung der heißen Abgase auf die Brennstofftrocknung und die Feuerungstemperatur über die gesamte Länge des Förderrostes sicherzustellen, kann dem biogenen Brennstoff zusätzlich heißes Abgas entlang des Förderrostes von oben zugeführt werden.

Zur Durchführung des Verfahrens kann von einem an eine Brennstoffzuführeinrichtung angeschlossenen Feuerungsraum ausgegangen werden, der als Flugbehälter ausgebildet ist, an den unterhalb des Anschlusses der Brennstoffzuführeinrichtung wenigstens eine Abgaszuleitung und oben eine Rauchgasableitung angeschlossen sind (DE-A-3 612 888). Wird dabei der Flugbehälter über einen unteren Anschlußkonus und einen Anschlußstutzen an die Abgasleitung angeschlossen, so kann der dosiert zugeführte Brennstoff von unten nach oben durch den Flugbehälter gefördert werden, ohne eine ungewollte Brennstoffansammlung im Bodenbereich des Feuerungsraumes befürchten zu müssen. Es wird vielmehr eine innige vermischung des Brennstoffes und des Abgases sichergestellt, wobei wegen der vertikalen Strömungsverhältnisse die Verweilzeit der Brennstoffstücke im Feuerungsraum vom Stückgewicht mitbestimmt wird, was einen vollständigen Ausbrand unterschiedlich großer Brennstoffstücke erlaubt, ohne die Verweilzeit des feinkörnigeren Brennstoffanteiles im Flugbehälter unnötig zu vergrößern.

Zur zusätzlichen Steuerung der Verbrennungsbedingungen kann die Brennstoffzuführeinrichtung zumindest eine Sichtstufe mit wenigstens zwei Austragsleitungen für Brennstoff mit unterschiedlicher Korngröße umfassen, wobei die Austragsleitung für den grobkörnigeren Brennstoffanteil oberhalb der Austragungsleitung für den feinkörnigeren Brennstoffanteil in den Flugbehälter mündet. Mit der vorausgehenden Verbrennung des feinkörnigeren Brennstoffanteiles kann für die Verbrennung des grobkörnigeren Brennstoffanteiles ein für die Verbrennung schwer brennbarer Stoffe günstigeres, noch höheres Temperaturniveau erhalten werden. Wegen des höheren Gewichtes des grobkörnigeren Brennstoffanteiles wird trotz einer späteren Aufgabe dieses Brennstoffanteiles für ihn eine ausreichende Verweilzeit im Feuerungsraum sichergestellt.

Zur Anpassung der Abgasmenge an die jeweilige Brennstoffmenge kann vorteilhaft zwischen der Abgaszuleitung und der Rauchgasableitung eine Umgehungsleitung für einen Abgasteilstrom vorgesehen sein, an die eine in den Flugbehälter mündende Zuleitung über eine Steuereinrichtung für die Durchströmmenge des Abgases anschließt. Über die Abgaszuleitung kann in einem solchen Fall dem Flugbehälter eine konstante, an den geringsten Brennstoffeinsatz angepaßte Abgasmenge zugeführt werden, die durch die für höhere Brennstoffmengen zur Einhaltung eines vorgegebenen Bereiches der Verbrennungstemperatur erforderliche zusätzliche Abgasmenge über die von der Abgaszuleitung abgezweigte Umgehungsleitung ergänzt wird. Über eine entsprechende Steuereinrichtung für die Durchströmmenge des Abgases kann der zusätzliche Abgasstrom an die jeweilige Menge des eingesetzten Brennstoffes angepaßt werden.

Reicht das vollständige Abgasangebot für eine Beschränkung der Verbrennungstemperatur nicht aus, so kann in Durchströmrichtung hinter der üblicherweise vorgesehenen Kühleinrichtung für die Rauchgase von der Rauchgasableitung eine in den Flugbehälter mündende Rückleitung mit einer Steuereinrichtung für die Durchströmmenge abzweigen, so daß die in den Flugbehälter rückgeführten, gekühlten Rauchgase für eine entsprechende Beschränkung der Verbrennungstemperatur sorgen.

Um unabhängig von den Eigenschaften des jeweils eingesetzten Brennstoffes eine vorgegebene Verbrennungstemperatur über eine Steuerung der als Verbrennungsluft zugeführten Abgasmenge sicherzustellen, empfiehlt es sich, die Steuereinrichtung für die Durchströmmenge in der mit der Umgehungsleitung verbundenen Zuleitung bzw. in der an die Rauchgasableitung angeschlossenen Rückleitung über einen von einem Temperaturfühler für die Verbrennungstemperatur beaufschlagten Regler zu betätigen, der beim Auftreten einer Soll-Istwertdifferenz den über den Temperaturfühler erfaßten Istwert der Verbrennungsgastemperatur an den jeweiligen Sollwert durch einen entsprechenden Eingriff in die Abgaszuführung angleicht.

Schließt der Feuerungsraum an ein zur Vorbehandlung des Brennstoffes vorgesehenes Wirbelbett an, so ist oberhalb bzw. im Bereich des Wirbelbettes wenigstens ein Abgasanschluß vorzusehen, um den Brennstoff aus dem Wirbelbett in den Feuerungsraum mitzunehmen, in dem die Verbrennung im wesentlichen im Abgasstrom erfolgen soll. Dies kann vorteilhaft dadurch erreicht werden, daß der Feuerungsraum seitlich an das Wirbelbett anschließt und gegenüber einem oberhalb des Wirbelbettes gebildeten Nachverbrennungsraum durch eine Zwischenwand getrennt wird, wobei der Feuerungsraum und der Nachverbrennungsraum durch eine obere Rauchgasumlenkung verbunden sind. Durch diese Maßnahme kann im Feuerungsraum eine weitgehend aus den heißen Abgasen gespeiste Förderströmung erreicht werden, insbesondere wenn unten in den Feuerungsraum wenigstens eine zusätzliche Abgasleitung mündet. Durch die Umlenkung der Rauchgase zwischen dem Feuerungsraum und dem Nachverbrennungsraum oberhalb des Wirbelbettes ergibt sich außerdem eine gewisse Sichtwirkung , so daß allenfalls noch nicht ausgebrannte, größere Brennstoffstücke wieder durch den Nachverbrennungsraum zum Wirbelbett gelangen, um im Anschluß daran noch einmal durch den Feuerungsraum gefördert zu werden.

Ein einen Förderrost aufweisender Feuerungsraum, in den Verbrennungsluft durch den Förderrost zugeführt wird, kann zum Einsatz heißer Abgase als zusätzliche Verbrennungsluft so ausgebildet werden, daß oberhalb des Förderrostes im Bereich der Brennstoffaufgabe eine Abgasleitung in den Feuerungsraum mündet. Das aus dieser Abgaslseitung in den Feuerungsraum strömende heiße Abgas bewirkt eine intensive Trocknung und Erwärmung des in den Feuerungsraum geförderten Brennstoffes, so daß wiederum mit einer hohen Verbrennungstemperatur gerechnet werden kann. Um die Wirkung der heißen Abgase nicht auf den Einlaufbereich des Feuerungsraumes zu beschränken, können entlang des Förderrostes zusätzliche Abgasanschlüsse oberhalb des Förderrostes in den Feuerungsraum münden. Eine Einleitung der Abgase unterhalb des Förderrostes verbietet sich wegen der notwendigen Rostkühlung.

Selbstverständlich kann auch bei einer Verbrennung von biogenem Brennstoff in einem an ein Wirbelbett anschließenden Feuerungsraum oder einem einen Förderrost aufweisenden Feuerungsraum die Verbrennungstemperatur durch eine Steuerung der Abgasströme in einem gewünschten Bereich gehalten werden. Zu diesem Zweck brauchen die zusätzlichen Abgasleitungen lediglich eine in Abhängigkeit von der Verbrennungstemperatur beaufschlagbare Steuereinrichtung für die Durchströmmenge an Abgas aufzuweisen, um bei einem Anstieg der Verbrennungstemperatur die Abgaszuführung zu vergrößern und bei einem Absinken der Verbrennungstemperatur die Abgaszuführung zu verringern.

An Hand der Zeichnung wird das erfindungsgemäße Verfahren zum Verbrennen von stückigen, biogenen Brennstoffen näher erläutert. Es zeigen.
Fig. 1 eine erfindungsgemäße Vorrichtung zur Durchführung des Verfahrens in einem schematischen Blockschaltbild,
Fig. 2 den als Flugbehälter ausgebildeten Feuerungsraum einer solchen Vorrichtung ausschnittsweise in einem schematischen Vertikalschnitt in einem größeren Maßstab,
Fig. 3 eine der Fig. 2 entsprechende Darstellung des Flugbehälters in einer abgewandelten Ausführungsform,
Fig. 4 einen ein Wirbelbett aufweisenden Feuerungsraum für das Verbrennen von biogenen Brennstoffen in einem schematischen Vertikalschnitt,
Fig. 5 den Feuerungsraum gemäß der Fig. 4 in einem Schnitt nach der Linie V-V der Fig. 4,
Fig. 6 eine gegenüber dem Ausführungsbeispiel nach den Fig. 4 und 5 abgewandelte Ausführungsform eines Wirbelschichtofens in einem schematischen Vertikalschnitt,
Fig. 7 eine Rostfeuerung zum Verbrennen biogener Brennstoffe in einem schematischen Längsschnitt,
Fig. 8 diese Rostfeuerung in einem Querschnitt nach der Linie VIII-VIII der Fig. 7 und
Fig. 9 eine der Fig. 1 entsprechende Darstellung einer Konstruktionsvariante.

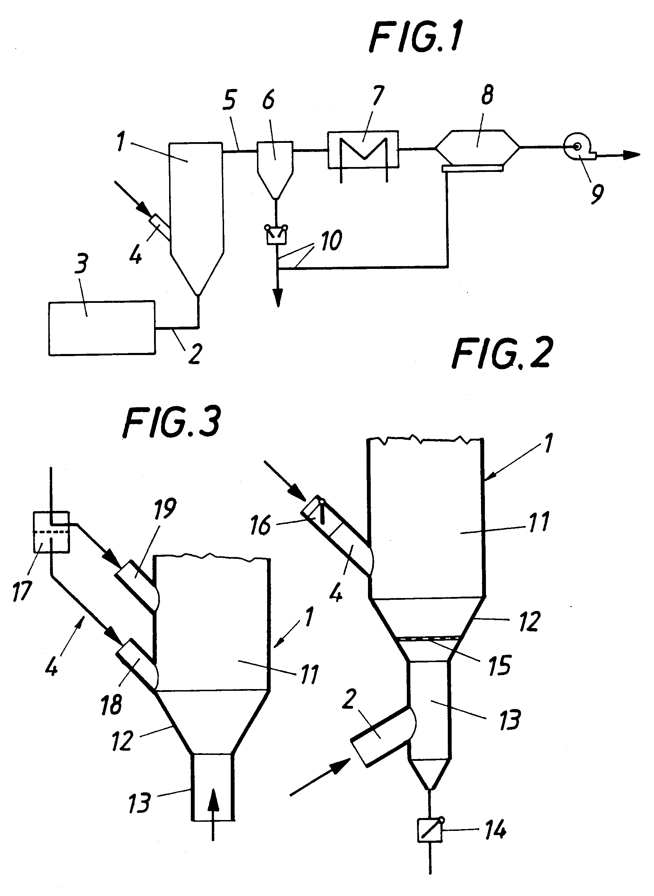

Wie der Fig. 1 entnommen werden kann, umfaßt eine Vorrichtung zum Verbrennen von stückigen, biogenen Brennstoffen einen Feuerungsraum 1, der an die Abgasleitung 2 einer Brennkraftmaschine 3, beispielsweise einer Gasturbine, oder einer industriellen Kühleinrichtung angeschlossen ist. Die Rauchgase, die beim Verbrennen des über eine Brennstoffaufgabe 4 in den Feuerungsraum 1 geförderten Brennstoffes entstehen, werden über eine an den Feuerungsraum 1 angeschlossene Rauchgasableitung 5, in die ein zur Feststoffabtrennung dienender, beispielsweise als Zyklon ausgebildeter Vorabscheider 6 eingeschaltet ist, einem Wärmetauscher 7 zugeführt, um die fühlbare Abwärme der Rauchgase wirtschaftlich nützen zu können. Dem Wärmetauscher 7 folgt eine Abgasfiltereinrichtung 8, die an ein Sauggebläse 9 angeschlossen ist, so daß die gekühlten und gereinigten Rauchgase abgeblasen werden können. Die im Vorabscheider 6 bzw. in der Filtreinrichtung 8 ausgefällten Feststoffe können über Austragsleitungen 10 abgeführt werden.

Wie den Fig. 2 und 3 entnommen werden kann, kann der Feuerungsraum 1 vorteilhaft aus einem zylindrischen Flugbehälter 11 bestehen, der über einen unteren Anschlußkonus 12 und einen Anschlußstutzen 13 an die Abgasleitung 2 angeschlossen ist, so daß sich durch den Flugbehälter 11 eine Abgasströmung ergibt, der der Brennstoff über die Brennstoffaufgabe 4 dosiert zugeführt werden kann. Sich im Anschlußstutzen 13 unterhalb der Einmündung der Abgasleitung 2 ansammelnde Ablagerungen können über eine Pendelklappe 14 ausgetragen werden, die für einen ausreichend dichten Abschluß des Anschlußstutzens 13 sorgt. Um zu verhindern, daß grobstückiges Brenngut ohne zu verbrennen in den Ansatzstutzen 13 gelangt, kann im Anschlußkonus 12 ein Rost 15 vorgesehen sein. Über die Brennstoffaufgabe 4, die eine Pendelklappe 16 zur Vermeidung eines Falschluftzutrittes zum Feuerungsraum 1 aufweist, gelangt der stückelige, biogene Brennstoff in den unteren Teil des Flugbehälters 11, wo die Brennstoffstücke von dem über das Sauggebläse 9 angesaugten Abgasstrom erfaßt und durch den Feuerungsraum 1 gefördert werden, wobei die Brennstoffstücke nach einer gleichmäßigen Trocknung mit hoher Verbrennungstemperatur schadstoffarm ausbrennen, und zwar mit einem nur geringen Sauerstoffüberschuß.

Die Verbrennungsbedingungen können durch eine entsprechende Sichtung des Brennstoffes und eine getrennt Aufgabe der gesichteten Brennstoffanteile verbessert werden. Zu diesem Zweck kann der Brennstoffzuführeinrichtung 4 eine Sichtstufe 17 mit zwei Austragsleitungen 18 und 19 für den feinkörnigeren und den grobkörnigeren Brennstoffanteil zugeordnet sein. Da die Austragsleitung 18 der Sichtstufe 17 für die feinkörnigeren Brennstoffanteile unterhalb der Austragsleitung 19 für die grobkörnigeren Brennstoffanteile in der Feuerungsraum 1 mündet, ergibt sich für die Verbrennung des grobkörnigeren Brennstoffanteiles ein höheres Temperaturniveau, weil zumindest ein Teil des feinkörnigeren Brennstoffanteils bereits im Bereich der Mündung der Austragsleitung 19 für die grobkörnigeren Brennstoffanteile brennt, was einen vollständigen Ausbrand auch der grobkörnigeren Brennstoffanteile sichert.

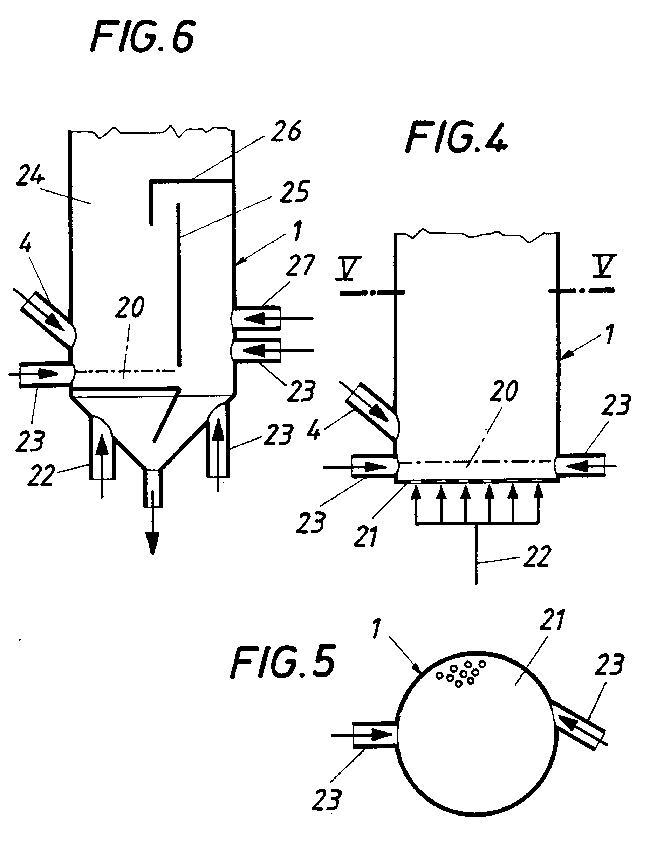

Gemäß den Fig. 4 und 5 ist der Feuerungsraum 1 als Wirbelschichtofen ausgebildet, dessen Wirbelbett 20 mit Hilfe von durch den Ofenboden 21 geblasene Druckluft erzeugt wird, die über eine Druckleitung 22 zugeführt wird. Die mit der Abgasleitung 2 verbundenen Abgasanschlüsse 23 münden oberhalb bzw. im Bereich des Wirbelbettes 20 in den Feuerungsraum 1, so daß ein Teil der sonst erforderlichen Verbrennungsluft durch die heißen Abgase ersetzt werden kann, was die Verbrennungsbedingungen innerhalb des Feuerungsraumes 1 erheblich verbessert. Die Abgasanschlüsse 23 können dabei in radialer oder in tangentialer Richtung in den Feuerungsraum münden. Eine tangentiale Einmündung der Abgasströmung hat den Vorteil einer zusätzlichen Verwirbelung.

Im Wirbelschichtofen nach der Fig. 6 sind die besonderen Feuerungsbedingungen für das Verbrennen biogener Brennstoffe vorteilhaft berücksichtigt, weil sich der Feuerungsraum 1 nicht unmittelbar über dem Wirbelbett 20 befindet, sondern sich seitlich an das Wirbelbett 20 anschließt. Der Raum oberhalb des Wirbelbettes 20 dient vielmehr als Nachverbrennungsraum 24, der gegenüber dem Feuerungsraum 1 durch eine Zwischenwand 25 getrennt ist. Da der Feuerungsraum 1 und der Nachverbrennungsraum 24 durch eine obere Rauchgasumlenkung26 miteinander verbunden sind, stellt sich im Bereich der Rauchgasumlenkung 26 eine Sichtung mit der Wirkung ein, daß schwerere noch nicht völlig ausgebrannte Brennstoffstücke nach dem Austragen aus dem Feuerungsraum 1 zum Wirbelbett 20 gelangen und mit dem Abgasstrom wieder durch den Feuerungsraum gefördert werden. Die seitliche Anordnung des Feuerungsraumes 1 bietet außerdem die Möglichkeit, im Feuerungsraum eine weitgehend von den Abgasen bestimmte Gasströmung sicherzustellen, weil in den Feuerungsraum 1 zusätzliche Abgasanschlüsse 23 münden können. Zusätzlich könnte für besondere Fälle in den Feuerungsraum 1 hochwertiger Stützbrennstoff über eine Zuleitung 27 geführt werden, wenn eine höhere Verbrennungstemperatur erwünscht wird. Die Zuleitung eines solchen Stützbrennstoffes kann selbstverständlich auch bei einem Wirbelschichtofen gemäß den Fig. 4 und 5 vorgesehen sein.

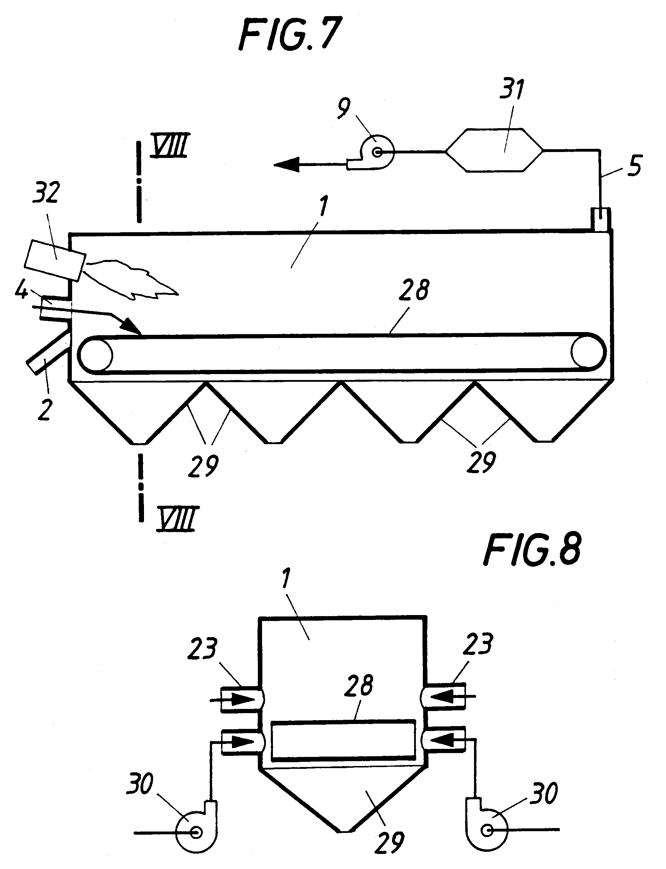

In den Fig. 7 und 8 ist eine Rostfeuerung zum Verbrennen von biogenen Brennstoffen mit Hilfen von heißen, sauerstoffhaltigen Abgasen dargestellt. In dem Feuerungsraum 1 ist ein Förderrost 28 zur Aufnahme des Brennstoffes vorgesehen. Unterhalb dieses Förderrostes 28 befinden sich übliche Staubsammelkästen 29; die den Rostdurchfall aufnehmen und über entsprechende, nicht näher dargestellte Abddichtungseinrichtungen austragen. Die Verbrennungsluft wird dem Brennstoff einerseits über Gebläse 30 durch den Förderrost 28 und anderseits oberhalb des Förderrostes 28 zugeführt. Während die durch den Rost 29 zugeführte Verbrennungsluft wegen der sonst damit verbundenen Wärmebelastung der Gebläse 30 keine größere Vorwärmung erfährt, kann die oberhalb des Rostes zugeführte Verbrennungsluft durch sauerstoffhaltige, heiße Abgase gebildet werden. Zu diesem Zweck ist der Feuerungsraum 1 im Bereich der Brennstoffaufgabe 4 oberhalb des Rostes 28 an eine solche Abgasleitung 2 angeschlossen. Zusätzlich können entlang des Förderrostes 28 Abgasanschlüsse 23 vorgesehen sein, um über die Rostlänge eine entsprechende Behandlung des Brennstoffes durch die heißen Abgase sicherzustellen. Nach erfolgter Verbrennung und Wärmenutzung werden die Rauchgase über eine Abgasleitung 5 einer Entstaubungseinrichtung 31 zugeführt, bevor sie über ein Sauggebläse 9 abgeblasen werden.

Reicht die Unterstützung der Brennstofftrocknung und der Verbrennung durch die heißen Abgase nicht aus, so kann über einen Brenner 32 hochwertiger Stützbrennstoff verbrannt werden, um mit Hilfe dieses Brenners insbesondere die Trocknung zu beschleunigen.

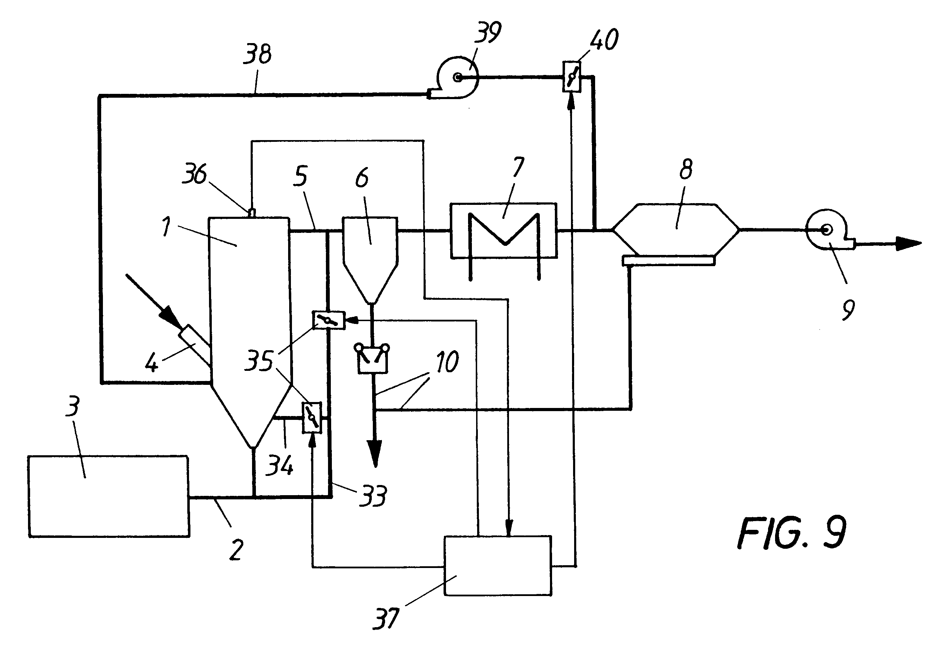

Der Vorrichtungsaufbau nach der Fig. 9 entspricht im wesentlichen dem nach der Fig. 1. Zum Unterschied zur Vorrichtung nach der Fig. 1 ist jedoch zwischen der Abgaszuleitung 2 und der Rauchgasableitung 5 eine Umgehungsleitung 33 vorgesehen, an die eine in den Flugbehälter 1 mündende Zuleitung 34 über eine Steuereinrichtung 35 für die Durchströmmenge abzweigt. Diese Steuereinrichtung 35 besteht gemäß dem Ausführungsbeispiel aus je einer verstellbaren Drosseleinrichtung in den Leitungen 33 und 34. Der Abgasstrom der Brennkraftmaschine 3 wird durch diese Maßnahme in zwei Teilströme aufgeteilt, wobei der durch die Umgehungsleitung 33 strömende Abgasteilstrom entsprechend der Einstellung der Steuereinrichtung 35 zumindest teilweise dem Flugbehälter 1 zugeführt werden kann. Der nicht dem Flugbehälter 1 zuströmende Abgasteilstrom wird den Rauchgasen in der Rauchgasableitung 5 zugemischt. Diese besondere Führung der Abgasströme erlaubt eine einfache Anpassung der für die Verbrennung vorgesehenen Abgasmengen an die jeweils aufgegebene Brennstoffmenge, um die Verbrennungstemperatur in einem vorgegebenen Bereich zu halten. Diese Verbrennungstemperatur wird über einen in einen Flugbehälter 1 ragenden Temperaturfühler 36 erfaßt und einem Regler 37 zugeführt, der den ermittelten Temperatur-Istwert mit einem Sollwert vergleicht und beim Auftreten einer Soll-Istwertdifferenz die Steuereinrichtung 35 im Sinne eines Soll-Istwertabgleiches beaufschlagt.

Reicht der Abgasstrom der Brennkraftmaschine nicht für eine entsprechende Temperaturbeschränkung aus, so kann zusätzlich ein Anteil des Rauchgases nach seiner Kühlung in den Feuerungsraum 1 zurückgeführt werden, wie dies ebenfalls in der Fig. 9 angedeutet ist. In der Rückleitung 38, in die ein Gebläse 39 eingeschaltet ist, ist wiederum eine Steuereinrichtung 40 für die Durchströmmenge vorgesehen, die über den Regler 37 in Abhängigkeit von der Verbrennungstemperatur beaufschlagt werden kann, um im Bedarfsfall mit Hilfe der kühlen Rauchgase einen unerwünschten Anstieg der Verbrennungstemperatur zu vermeiden. Es braucht wohl nicht hervorgehoben zu werden, daß die Steuerung der Durchströmmenge auch über das Gebläse 39 erfolgen könnte. Obwohl die Regelung der dem Feuerungsraum zugeführten Abgasströmungen gemäß der Fig. 9 an Hand eines Flugbehälters erklärt wurde, ist die Anwendung einer solchen Regelung selbstverständlich nicht auf den Einsatz eines Flugbehälters beschränkt, sondern kann auch bei allen anderen Formen der Feuerung ausgenützt werden, wie Sie in den Fig. 4 bis 8 beispielsweise dargestellt sind.

## Patentansprüche

1. Verfahren zum Verbrennen von stückigen, biogenen Brennstoffen, die mit Hilfe vorgewärmter Verbrennungsluft zunächst getrocknet und dann verbrannt werden, wobei als vorgewärmte Verbrennungsluft den biogenen Brennstoffen sauerstoffhaltige Abgase aus Brennkraftmaschinen, insbesondere Gasturbinen, bzw. aus industriellen Kühlprozessen, z. B. der Zementklinkerkühlung, zugeführt werden.

2. Verfahren nach Anspruch 1, dadurch gekennzeichnet, daß die sauerstoffhaltigen Abgase den biogenen Brennstoffen in einer von der Verbrennungstemperatur abhängigen Menge zugeführt werden.

3. Verfahren nach Anspruch 1 oder 2, dadurch gekennzeichnet, daß ein Teil der aus der Verbrennung der biogenen Brennstoffe anfallenden Rauchgase nach einer Kühlung in einer von der Verbrennungstemperatur abhängigen Menge den sauerstoffhaltigen Abgasen zugeführt wird.

4. Verfahren nach einem der Ansprüche 1 bis 3, dadurch gekennzeichnet, daß der biogene Brennstoff einem kontinuierlichen Abgasstrom dosiert aufgegeben wird.

5. Verfahren nach Anspruch 4, dadurch gekennzeichnet, daß der biogene Brennstoff in Abhängigkeit von seiner Korngröße dem Abgasstrom in Strömungsrichtung hintereinander aufgegeben wird.

6. Verfahren nach einem der Ansprüche 1 bis 3, dadurch gekennzeichnet, daß der Abgasstrom dem biogenen Brennstoff oberhalb bzw. im Bereich eines Wirbelbettes zugeführt wird und daß der vom Abgasstrom mitgerissene Brennstoff in einer an das Wirbelbett anschließenden Verbrennungsstrecke in dem Abgasstrom verbrannt wird.

7. Verfahren nach einem der Ansprüche 1 bis 3, dadurch gekennzeichnet, daß dem einem Förderrost aufgegebenen, biogenen genen Brennstoff die Abgase im Aufgabebereich des Brennstoffes zugeführt werden.

8. Verfahren nach Anspruch 7, dadurch gekennzeichnet, daß dem biogenen Brennstoff zusätzlich Abgase entlang des Förderrostes von oben zugeführt werden.

9. Vorrichtung zur Durchführung des Verfahrens nach einem der Ansprüche 1 bis 5 mit einem an eine Brennstoffzuführeinrichtung (4) angeschlossenen Feuerungsraum (1), der aus einem Flugbehälter (11) besteht, an den unterhalb des Anschlusses der Brennstoffzuführeinrichtung (4) wenigstens eine Abgaszuleitung (2) und oben eine Rauchgasableitung (5) angeschlossen sind, dadurch gekennzeichnet, daß der Flugbehälter (11) über einen unteren Anschlußkonus (12) und einen Anschlußstutzen (13) an die Abgasleitung (2) angeschlossen ist.

10. Vorrichtung nach Anspruch 9, dadurch gekennzeichnet, daß die Brennstoffzuführeinrichtung (4) zumindest eine Sichtstufe (17) mit wenigstens zwei Austragsleitungen (18, 19) für Brennstoff mit unterschiedlicher Korngröße umfaßt und daß die Austragsleitung (19) für den grobkörnigeren Brennstoffanteil oberhalb der Austragsleitung (18) für den feinkörnigeren Brennstoffanteil in den Flugbehälter (11) mündet.

11. Vorrichtung nach Anspruch 9 oder 10, dadurch gekennzeichnet, daß zwischen der Abgaszuleitung (2) und der Rauchgasableitung (5) eine Umgehungsleitung (33) für einen Abgasteilstrom vorgesehen ist, an die eine in den Flugbehälter (11) mündende Zuleitung (34) über eine Steuereinrichtung (35) für die Durchströmmenge des Abgases anschließt.

12. Vorrichtung nach einem der Ansprüche 9 bis 11, dadurch gekennzeichnet, daß in die Rauchgasableitung (5) eine Kühleinrichtung (7) eingeschaltet ist und daß in Durchströmrichtung hinter der Kühleinrichtung (7) von der Rauchgasableitung (5) eine in den Flugbehälter (11) mündende Rückleitung (38) mit einer Steuereinrichtung (40) für die Durchströmmenge abzweigt.

13. Vorrichtung nach Anspruch 11 oder 12, dadurch gekennzeichnet, daß die Steuereinrichtung (35, 40) für die Durchströmmenge in der mit der Umgehungsleitung (33) verbundenen Zuleitung (34) bzw. in der an die Rauchgasableitung (5) angeschlossenen Rückleitung (38) über einen von einem Temperaturfühler (36) für die Verbrennungstemperatur beaufschlagten Regler (37) betätigbar sind.

14. Vorrichtung zur Durchführung des Verfahrens nach Anspruch 6 mit einem an ein Wirbelbett (20) anschließenden Feuerungsraum (1), dadurch gekennzeichnet, daß oberhalb bzw. im Bereich des Wirbelbettes (20) wenigstens ein Abgasanschluß (23) mündet.

15. Vorrichtung nach Anspruch 14, dadurch gekennzeichnet, daß der Feuerungsraum (1) seitlich an das Wirbelbett (20) anschließt und gegenüber einem oberhalb des Wirbelbettes (20) gebildeten Nachverbrennungsraum (24) durch eine Zwischenwand (25) getrennt ist und daß der Feuerungsraum (1) und der Nachverbrennungsraum (24) durch eine obere Rauchgasumlenkung (26) verbunden sind.

16. Vorrichtung nach Anspruch 15, dadurch gekennzeichnet, daß unten in den Feuerungsraum (1) wenigstens eine zusätzliche Abgasleitung (23) mündet.

17. Vorrichtung zur Durchführung des Verfahrens nach Anspruch 7 mit einem einen Förderrost (28) aufweisenden Feuerungsraum (1) und mit einer Verbrennungsluftzufuhr durch den Förderrost (28), dadurch gekennzeichnet, daß oberhalb des Förderrostes (28) im Bereich der Brennstoffaufgabe (4) eine Abgasleitung (2) in den Feuerungsraum (1) mündet.

18. Vorrichtung nach Anspruch 17, dadurch gekennzeichnet, daß entlang des Förderrostes (28) zusätzliche Abgasanschlüsse (23) oberhalb des Förderrostes (28) in den Feuerungsraum (1) münden.

19. Vorrichtung nach Anspruch 16 oder 18, dadurch gekennzeichnet, daß die zusätzlichen Abgasleitungen (23) eine in Abhängigkeit von der Verbrennungstemperatur beaufschlagbare Steuereinrichtung für die Durchströmmenge an Abgas aufweisen.

## Claims

1. A method of burning biogenic lump fuels which are additionally dried with preheated air for combustion and then burnt, wherein the preheated air for combustion supplied to the biogenic fuels consists of oxygen-containing exhaust gases from internal combustion engines, particularly gas turbines, or from industrial cooling processes, such as cement clinker cooling.

2. A method according to claim 1, characterised in that the oxygen-containing exhaust gases are supplied to the biogenic fuels in a proportion depending on the combustion temperature.

3. A method according to claim 1 or 2, characterised in that some of the flue gases resulting from combustion of the biogenic fuels are cooled and then supplied to the oxygen-containing exhaust gases in a proportion depending on the combustion temperature.

4. A method according to any of claims 1 to 3, characterised in that the biogenic fuel is supplied in metered manner to a continuous stream of exhaust gas.

5. A method according to claim 4, characterised in that the biogenic fuel is supplied successively in the direction of flow, in dependence on its particle size, to the stream of exhaust gas.

6. A method according to any of claims 1 to 3, characterised in that the stream of exhaust gas is supplied to the biogenic fuel above or in the region of a fluidised bed, and the fuel entrained by the stream of exhaust gas is burnt in the exhaust-gas stream in a combustion zone adjacent the fluidised bed.

7. A method according to any of claims 1 to 3, characterised in that the exhaust gases are supplied to the biogenic fuel, delivered to a feed grate, in the fuel delivery zone.

8. A method according to claim 7, characterised in that additional exhaust gases are supplied to the biogenic fuel from above, along the feed grate.

9. Apparatus for working the method according to any of claims 1 to 5, comprising a combustion chamber (1) connected to a fuel supply device (4) and comprising a fly-ash container (11) to which a flue gas discharge line (5) is connected at the top and at least one exhaust-gas feed line (2) is connected below the connection of the fuel supply device (4), characterised in that the fly-ash container (11) is connected to the exhaust-gas line (2) via a bottom cone (12) and a nozzle (13).

10. Apparatus according to claim 9, characterised in that the fuel supply device (4) comprises at least one separating stage (17) with at least two discharge lines (18, 19) for fuel of different particle sizes, and the discharge line (19) for the coarser fuel component opens into the fly-ash container (11) above the discharge line (18) for the finer fuel component.

11. Apparatus according to claim 9 or 10, characterised in that a bypass line (33) for a part stream of exhaust gas is provided between the exhaust-gas feed line (2) and the flue gas discharge line (5), and is connected, via a control device (35) for regulating the flow rate of the exhaust gas, to a feed line (34) opening into the fly-ash container (11).

12. Apparatus according to any of claims 9 to 11, characterised in that a cooling device (7) is incorporated in the flue-gas discharge line (5), and a return line (38) comprising a control device (40) for regulating the flow rate branches off from the flue-gas discharge line (5) behind the cooling device (7) in the direction of flow.

13. Apparatus according to claim 11 or 12, characterised in that the control device (35, 40) for regulating the flow rate can be actuated in the feed line (34) connected to the bypass line (33) or in the return line (38) connected to the flue gas discharge line (5), via a controller (37) acted upon by a combustion-temperature sensor (36).

14. Apparatus for working the method according to claim 6, comprising a combustion chamber (1) adjacent a fluidised bed (20), characterised in that at least one exhaust-gas connection (23) opens above or in the region of the fluidised bed (20).

15. Apparatus according to claim 14, characterised in that the combustion chamber (1) is adjacent the side of the fluidised bed (20) and separated by a partition (25) from an after-combustion chamber (24) formed above the fluidised bed (20), and the combustion chamber (1) and the after-combustion chamber (24) are connected by an upper flue-gas bypass (26).

16. Apparatus according to claim 15, characterised in that at least one additional exhaust-gas line (23) opens into the bottom of the combustion chamber (1).

17. Apparatus for working the method according to claim 7, comprising a combustion chamber with a feed grate (28) and a supply of air for combustion through the feed grate (28), characterised in that an exhaust-gas line (2) opens into the combustion chamber (1) above the feed grate (28) and in the region of the fuel feed (4).

18. Apparatus according to claim 17, characterised in that additional exhaust-gas connections (23) open into the combustion chamber (1) along and above the feed grate (28).

19. Apparatus according to claim 16 or 18, characterised in that the additional exhaust-gas lines (23) comprise a device for controlling the flow rate of exhaust gas and acted upon in dependence on the combustion temperature.

## Revendications

1. Procédé de combustion de combustible biogène en morceaux, ayant été séché à l'aide d'air de combustion préchauffé puis brûlés, dans lequel l'on amène à titre d'air de combustion préchauffé au combustible biogène, des gaz d'échappement contenant de l'oxygène et issus de machines motrices à combustion, en particulier de turbines à gaz, respectivement de processus de réfrigération industrielle, par exemple de la réfrigération du klinker de ciment.

2. Procédé selon la revendication 1,
caractérisé par le fait que les gaz d'échappement de l'oxygène sont amenés aux combustibles biogènes en une quantité dépendant de la température de la combustion.

3. Procédé selon la revendication 1 ou 2,
caractérisé par le fait qu'une partie des gaz de fumée produits, issus de la combustion des combustibles biogènes, est amené après un refroidissement, aux gaz d'échappement contenant de l'oxygène, en une quantité dépendant de la température de combustion.

4. Procédé selon l'une des revendications 1 à 3,
caractérisé par le fait que le combustible biogène est fourni de façon dosée à un courant de gaz d'échappement continu.

5. Procédé selon la revendication 4,
caractérisé par le fait que le combustible biogène est fourni au courant du gaz d'échappement, en des endroits situés les uns derrière les autres dans la direction de l'écoulement, en fonction de sa taille de grain.

6. Procédé selon l'une des revendications 1 à 3,
caractérisé par le fait que le courant de gaz d'échappement est amené au combustible biogène, au-dessus ou dans la zone d'un lit fluidisé et en ce que le combustible entraîné par le courant du gaz d'échappement est brûlé dans le courant du gaz d'échappement dans une veine de combustion se raccordant au lit fluidisé.

7. Procédé selon l'une des revendications 1 à 3,
caractérisé par le fait que les gaz d'échappement sont amenés dans la zone d'alimentation du combustible, aux combustibles biogènes fournis à une grille de transport.

8. Procédé selon la revendication 7,
caractérisé par le fait que des gaz d'échappement supplémentaires sont amenés par le haut aux combustibles biogènes, le long de la grille de transport.

9. Dispositif de mise en oeuvre du procédé selon l'une des revendications 1 à 5 avec une chambre de combustion (1) raccordée à un dispositif d'amenée de combustibles (4) et constituée d'un récipient à trajectoire de vol (11), auquel au-dessous du raccordement du dispositif d'amenée de combustibles (4) sont raccordées au moins une conduite d'amenée de gaz d'échappement (2) et en partie haute une conduite d'évacuation de gaz de fumée (5)
caractérisé par le fait que le récipient à trajectoire de vol (11) est raccordé à la conduite du gaz d'échappement (2) par l'intermédiaire d'un cône de raccordement (12) et d'une tubulure de raccordement (13).

10. Dispositif selon la revendication 9,
caractérisé par le fait que le dispositif d'amenée de combustibles (4) comprend au moins un étage de triage (17) avec au moins deux conduites d'extraction (18, 19) pour le combustible ayant des tailles de grain différentes et en ce que la conduite d'extraction (19) destinée à la partie du combustible dont la taille de grain est grossière débouche dans le récipient à trajectoire de vol (11) au-dessus de la conduite d'évacuation (18) destinée à la partie du combustible dont la taille de grain est plus fine.

11. Dispositif selon la revendication 9 ou 10,
caractérisé par le fait qu'entre la conduite d'amenée de gaz d'échappement (2) et la conduite d'évacuation de gaz de fumée (5) est prévue une conduite de contournement (33) destinée à un courant partiel de gaz d'échappement, conduite à laquelle se raccorde une conduite d'amenée (34) débouchant dans le récipient à trajectoire de vol (11), par l'intermédiaire d'un dispositif de commande (35) destiné à la commande du débit traversant du gaz d'échappement.

12. Dispositif selon l'une des revendications 9 à 11,
caractérisé par le fait que dans la conduite d'évacuation de gaz de fumée (5) est mis en circuit un dispositif de refroidissement (7) et en ce que dans la direction du passage de l'écoulement, derrière le dispositif de refroidissement (7) se ramifie depuis la conduite d'évacuation du gaz de fumée (5) une conduite de recyclage (38) débouchant dans le récipient à trajectoire de vol (11), avec un dispositif de commande (40) pour commander la valeur du débit traversant.

13. Dispositif selon la revendication 11 ou 12,
caractérisé par le fait que les dispositifs de commande (35, 40) destinés au débit traversant, dans la conduite d'amenée (34) reliée à la conduite de contournement (33) respectivement dans la conduite de recirculation (38) accordée à la conduite d'évacuation de gaz de fumée (5) peuvent être actionnés par l'intermédiaire d'un régulateur (37) sollicité par une sonde de température (36) appréhendant la température de combustion.

14. Dispositif de mise en oeuvre du procédé selon la revendication 6 avec une chambre de combustion (1) se raccordant à un lit fluidisé (20),
caractérisé par le qu'au moins un raccordement de gaz d'échappement (23) débouche au-dessus respectivement dans la zone du lit fluidisé (20).

15. Dispositif selon la revendication 14,
caractérisé par le fait que la chambre de combustion (1) se raccorde au lit fluidisé (20) et est séparée vis-à-vis d'une chambre de post-combustion (24) constituée au-dessus du lit fluidisé (20) au moyen d'une paroi intermédiaire (25) et en ce que la chambre de combustion (1) et la chambre de post-combustion (24) sont reliées au moyen d'une dérivation de gaz de fumée supérieure (26).

16. Dispositif selon la revendication 16,
caractérisé par le fait qu'au moins une conduite de gaz d'échappement (23) supplémentaire débouche dans la chambre de combustion (1).

17. Dispositif de mise en oeuvre du procédé selon la revendication 7 avec une forme de combustion (1) présentant une grille de transport (28) et avec une amenée d'air de combustion se faisant à travers la grille de transport (28), caractérisé par le fait qu'au-dessus de la grille de transport (28) une conduite de gaz d'échappement (2) débouche dans la chambre de combustion (1), dans la zone de l'alimentation en combustible (4).

18. Dispositif selon la revendication 17,
caractérisé par le fait que des raccordements de gaz d'échappement (23) supplémentaires débouchent dans la chambre de combustion (1) au-dessus de la grille de transport (28), le long de cette grille de transport (28).

19. Dispositif selon la revendication 16 ou 18,
caractérisé par le fait que des conduites de gaz d'échappement (23) supplémentaires présentent un dispositif de commande destiné à agir sur la valeur de l'écoulement traversant et pouvant être sollicité en fonction de la température de combustion.
